# EUROPÄISCHE PATENTSCHRIFT

(11) **EP 0 607 208 B1**
(45) Veröffentlichungstag und Bekanntmachung des Hinweises auf die Patenterteilung: **28.06.1995**
(21) Anmeldenummer: 92920607.6
(22) Anmeldetag: 30.09.1992
(51) Int. Cl.: B60T 8/48

(54) **BREMSANLAGE MIT BLOCKIERSCHUTZ- UND ANTRIEBSSCHLUPFREGELUNG**
BRAKING SYSTEM WITH ANTI-LOCK AND DRIVE SLIP CONTROL
SYSTEME DE FREINAGE AVEC DISPOSITIF ANTIBLOCAGE ET DISPOSITIF ANTIPATINAGE DES ROUES MOTRICES

(30) Priorität: 09.10.1991 DE 4133484
(43) Veröffentlichungstag der Anmeldung: 27.07.1994
(73) Patentinhaber: ITT Automotive Europe GmbH, 60488 Frankfurt am Main (DE)
(72) Erfinder: VOLZ, Peter, D-6100 Darmstadt (DE)
(86) Internationale Anmeldenummer: EP9202258
(87) Internationale Veröffentlichungsnummer: WO9307036

(56) Entgegenhaltungen:
- EP-A- 0 303 019
- EP-A- 0 319 719
- DE-A- 3 813 174
- FR-A- 2 601 636
- FR-A- 2 626 230

## Beschreibung

Die Erfindung bezieht sich auf eine hydraulische Bremsanlage mit Blockierschutz- und Antriebsschlupfregelung für ein Fahrzeug mit einer angetriebenen und einer nicht angetriebenen Achse, mit einem mehrkreisigen Hauptzylinder, mit elektrisch steuerbaren Einlaßventilen in den zu den Radbremsen führenden Druckmittelwegen und mit Auslaßventilen, die in den Druckabbauphasen die Radbremsen mit einem Druckausgleichsbehälter verbinden, mit einem Hilfsdruckversorgungssystem, das in den Antriebsschlupfregelphasen Bremsdruck zum Abbremsen der angetriebenen Räder erzeugt, wobei zur Begrenzung des Druckes Druckmittel über Druckbegrenzungsventile in den Hauptzylinder geleitet wird und von dort über Regelventile in den Druckausgleichsbehälter zurückfließt, und mit einem elektronischen Regler.

Bremsanlagen dieser Art sind bereits in unterschiedlicher Ausgestaltung bekannt. In der Offenlegungsschrift DE-36 24 344 A1 ist beispielsweise eine zweikreisige hydraulische Bremsanlage mit Blockierschutz- und Antriebsschlupfregelung beschrieben, bei der die Radbremse jedes Rades über ein Einlaß-/Auslaßventilpaar an das Bremsensystem angeschlossen ist. Zur Hilfsdruckversorgung während einer Blockierschutz- oder Antriebsschlupfregelung ist eine zweikreisige Hydraulikpumpe vorgesehen, die nur während eines Regelungsvorganges in Betrieb ist. Im Antriebsschlupfregelungsmodus fördert die Pumpe in zwei getrennten Kreisen Druckmittel über Druckbegrenzungsventile in die Arbeitskammern des Hauptzylinders. Die Arbeitskammern sind wiederum über Zentralventile mit dem Druckausgleichsbehälter der Bremsanlage verbunden. Diese Druckbegrenzungsventile sind elektrisch steuerbaren Trennventilen parallelgeschaltet, die in ihrer Ruhestellung das Hilfsdruckversorgungssystem mit dem Hauptzylinder verbinden.

Diese Trennventile mit den parallel liegenden Druckbegrenzungsventilen sind derart in das hydraulische System eingefügt, daß nach dem Umschalten der Trennventile die nicht angetriebenen Räder bzw. die zugehörigen Einlaßventile weiterhin an den Hauptzylinder, die angetriebenen Räder dagegen an das Hilfsdruckversorgungssystem angeschlossen sind; zur Antriebsschlupfregelung werden nämlich nur die Bremsen der angetriebenen Räder benötigt. Der auch im Antriebsschlupfregelungsmodus offengehaltene direkte Druckmittelweg von dem Hauptzylinder zu den Radbremsen der nicht angetriebenen Räder hat den Vorteil, daß über diese Radbremsen ein sogenanntes "Einbremsen" (Hineinbremsen) in den ASR-Modus möglich ist.

Ferner ist es grundsätzlich bekannt, wenn auch in der vorgenannten Offenlegungsschrift nicht ausdrücklich erwähnt, die Pedalbetätigung oder den Pedalweg über Wegschalter oder Wegsensoren, wie Bremslichtschalter, am Hauptzylinderkolben angebrachte Schalter usw., zu ermitteln und entsprechende elektrische Signale zu erzeugen. Diese wegabhängigen Signale werden zur Steuerung und Überwachung geregelter Bremsanlagen benötigt.

Bei den Bremssystemen der zu vor beschriebenen Art tritt nun die Schwierigkeit auf, daß beim "Einbremsen" in den ASR-Modus als Folge des eingeschalteten Hilfsdruckversorgungssystems und der ständigen Druckmitteleinspeisung in den Hauptzylinder sehr schnell ein Druck in den Arbeitskammern des Hauptzylinders hervorgerufen wird, der keine oder eine nur ungenügende Pedalbewegung zuläßt. Ist die Bremsanlage mit einem Pedalwegsensor ausgerüstet, entsteht die Schwierigkeit, daß beim Einbremsen in den ASR-Modus ein sicheres Ansprechen des Wegsensors nicht gewährleistet ist. Eine gegenseitige Überwachung mehrerer Schalter auf ihre Funktionsfähigkeit ist nicht mehr möglich. Zum eindeutigen Erkennen der Bremspedalbetätigung erwies es sich bisher als notwendig, den Bremsdruck in den Hauptzylinderkammern - zusätzlich zu dem Pedalweg - zu sensieren. Der damit verbundene Herstellungsaufwand ist von erheblichem Nachteil.

Der Erfindung liegt daher die Aufgabe zugrunde, den beschriebenen Nachteil bekannter Anlagen zu überwinden und mit einfachen, kostengünstigen Maßnahmen sicherzustellen, daß auch beim Einbremsen in den ASR-Modus ein zuverlässig sensierbarer, als Kriterium für die Regelung oder Überwachung auswertbarer Pedalweg oder Kolbenvorschub auftritt.

Es hat sich herausgestellt, daß diese Aufgabe durch eine Weiterbildung der eingangs genannten Bremsanlage gelöst werden kann, die darin besteht, daß die Bremsanlage mit Pedalweg-Sensoren und/oder -Schaltern ausgerüstet ist und daß der Regler die Auslaßventile, die die Radbremsen der nicht angetriebenen Räder mit dem Druckausgleichsbehälter verbinden, während einer Antriebsschlupfregelphase ansteuert und dadurch einen Druckmittelweg von dem Hauptzylinder über die Einlaßventile und Auslaßventile der nicht angetriebenen Räder zu dem Druckausgleichsbehälter freigibt.

Erfindungsgemäß wird also durch eine extrem einfache Maßnahme, die mit keinerlei zusätzlichen Herstellungskosten verbunden ist, sichergestellt, daß auch beim Einbremsen in einen ASR-Modus das Bremspedal einen auswertbaren Weg zurücklegt. Erreicht wird dies durch die Schaffung eines Druckmittel-Bypass zu dem Druckausgleichsbehälter über die ohnehin vorhandenen Bauteile.

Das oder die Auslaßventile, die die nicht angetriebenen Räder mit dem Druckausgleichsbehälter verbinden, werden zweckmäßigerweise durch eine Folge kurzer Pulse angesteuert. Da ohnehin Drosselstellen im Druckmittelweg vorhanden sind, ist jedoch auch ein ständiges Öffnen dieser Auslaßventile während des ASR-Modus denkbar.

In vielen Fällen dürfte es genügen, wenn im ASR-Modus nur eines von mehreren den nicht angetriebenen Rädern zugeordneten Auslaßventilen geöffnet wird.

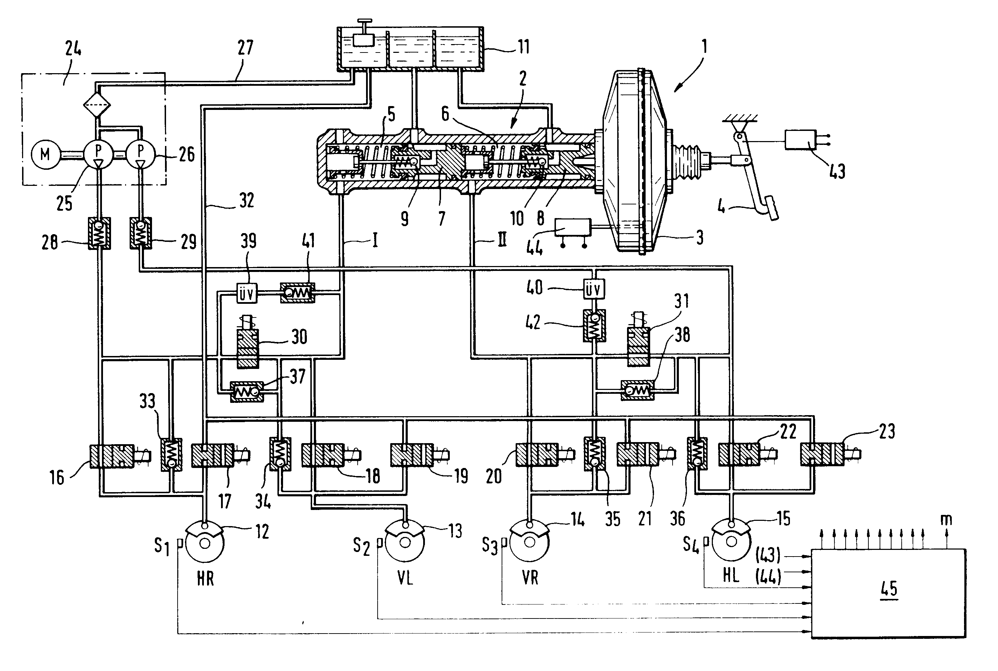

Weitere Merkmale, Vorteile und Anwendungsmöglichkeiten der Erfindung gehen aus der folgenden Beschreibung eines Ausfuhrungsbeispiels anhand der beigefügten Abbildung hervor.

Diese Abbildung zeigt in schematischer Vereinfachung die wichtigsten hydraulischen Komponenten einer Bremsanlage nach der Erfindung und deren Zusammenschaltung. Einige elektronische oder elektrische Komponenten sind ebenfalls schematisch angedeutet.

Die Bremsanlage nach der Abbildung besitzt einen Bremsdruckgeber 1, der sich aus einem Tandem-Hauptzylinder 2 und einem vorgeschalteten Unterdruck-Bremskraftverstärker 3, auf den über ein Pedal 4 die Bremskraft ausgeübt wird, zusammensetzt.

An die beiden Arbeitskammern 5,6 des Hauptzylinders 2 sind die Radbremsen 12 bis 15 über zwei hydraulisch getrennte Kreise I,II in diagonaler Anordnung angeschlossen. Das linke Vorderrad VL und das rechte Hinterrad HR gehören zu dem Bremskreis I, die beiden anderen Räder VR,HL zu dem Bremskreis II. Jedem Rad ist ein Einlaß-/Auslaßventilpaar 16,17;18,19;20,21;22,23 zugeordnet. Die Druckmittelwege über die Auslaßventile 17,19,21,23 führen zu einem Druckausgleichsbehälter 11.

Zu der Bremsanlage gehört ein Hilfsdruckversorgungssystem 24, das hier in Form von zwei Hydraulikpumpen 25,26 mit einem gemeinsamen elektromotorischen Antrieb M ausgebildet ist. Über Rückschlagventile 28,29 und Trennventile 30,31, denen Druckbegrenzungsventile 39,40 mit den zugehörigen Rückschlagventilen 41,42 parallel liegen, ist das Hilfsdruckversorgungssystem 24 an den Hauptzylinder 2 angeschlossen. Über Regelventile 9,10 in dem Schwimmkolben 7 bzw. Druckstangenkolben 8 des Hauptzylinders sind die Arbeitskammern 5,6 mit dem gemeinsamen Druckausgleichsbehälter 11 verbunden.

Die Trennventile 30,31 sind derart in die beiden Druckmittelkreise I,II eingefügt, daß nach dem Umschalten dieser Trennventile 30,31 Druckmittel aus dem Hilfsdruckversorgungssystem 24 nur zu den Radbremsen 12,15 der angetriebenen Räder, hier der Hinterräder HR,HL gelangen kann. Die nicht angetriebenen Räder, die Vorderräder VL,VR, die über ihre Einlaßventile 18,20 direkt an den Hauptzylinder angeschlossen sind, bleiben folglich im ASR-Modus drucklos.

Jedem Einlaßventil 16,18,20,22 ist in bekannter Weise ein Rückschlagventil 33 bis 36 parallelgeschaltet, das den Bremsdruckabbau nach dem Lösen der Bremse sicherstellt. Die den Trennventilen 30,31 parallelgeschalteten Rückschlagventile 37,38 werden bei einem Einbremsen in den ASR-Modus gegebenenfalls wirksam.

Der Bremsdruckgeber 1 ist in dem dargestellten Ausführungsbeispiel außerdem mit einem Bremsschalter oder Bremslichtschalter 43 und einem Pedalweg-Sensor 44 ausgerüstet. Der Pedalweg-Sensor 44 ist hier mit dem Kolben des Unterdruck-Verstärkers 3 verbunden. Als Pedalweg-Sensor 44 ist beispielsweise ein Potentiometer geeignet.

Im ASR-Modus wird der Hilfsdruck, den die Hydraulikpumpen 25,26 erzeugen, durch die Druckbegrenzungsventile 39,40 auf einen vorgegebenen Wert begrenzt. Sobald dieser Maximaldruck erreicht ist, wird Druckmittel über die Druckbegrenzungsventile 39,40 zu den Arbeitskammern 5,6 und von diesen über die Regelventile 9,10 zurück in den Druckausgleichsbehälter 11 geleitet. Über eine Leitung 27 sind die Saugseiten der Hydraulikpumpen 25,26 an den Behälter 11 angeschlossen.

Zur Steuerung der elektrisch betätigbaren Ventile, nämlich der Einlaß- und Auslaßventile und der Trennventile, sowie zum Ein- und Ausschalten des Elektromotors M des Hilfsdruckversorgungssystems ist ein elektronischer Regler 45 vorhanden. Die Stellsignale werden in bekannter Weise aus verschiedenen Meßsignalen gewonnen. Vor allem wird das Drehverhalten der einzelnen Räder, das mit Hilfe von Radsensoren S₁ bis S₄ gemessen wird, ausgewertet. Zur Überwachung des Systems, zum Unterscheiden mehrdeutiger Information usw. werden außerdem die Ausgangssignale des Bremslichtschalters 43 und des Wegsensors 44 herangezogen.

Die erfindungswesentliche Ansteuerung der Auslaßventile 19,21, die von den Radbremsen 13,14 der nicht angetriebenen Räder VL,VR zu dem Druckausgleichsbehälter 11 führen, während eines Antriebsschlupfregelungsvorgangs übernimmt ebenfalls der Regler 45. Es ergibt sich folgende Wirkungsweise:

Im ASR-Modus, das heißt während eines Antriebsschlupfregelungsvorganges, sind beide Hydraulikpumpen 25,26 der Kreise I,II eingeschaltet und fördern Druckmittel über die Druckbegrenzungsventile 39,40 in die Arbeitskammern 5,6 des Hauptzylinders 2. Bei unbetätigter Bremse verhindern die offenen Regelventile 9,10 das Ansteigen des Druckes in den Kammern 5,6. Bei Betätigungs des Pedals 4 werden jedoch sofort, d.h. nach einem kaum wahrnehmbaren Pedalweg, die als Regelventile dienenden Zentralventile 9,10 geschlossen, so daß sehr schnell ein Druck entsteht, der das Pedal 4 praktisch in seiner Ausgangsstellung arretiert. Weder der Bremslichtschalter 43 noch der Wegsensor 44 sprechen an. Mit Hilfe dieser wegabhängigen Schalter bzw. Sensoren läßt sich der Übergang von dem ASR-Modus in einen Bremsmodus nicht erkennen. Eine zuverlässige Signalisierung dieser Situation wäre nur mit einem (aufwendigen) Drucksensor möglich.

Erfindungsgemäß wird jedoch in dem ASR-Modus ein Bypaß über die Einlaßventile 18,20 und die Auslaßventile 19,21 zu dem Druckmittelbehälter 11 geschaffen. Folglich kann auch nach dem Schließen der Regel- bzw. Zentralventile 9,10 Druckmittel abfließen. Dies führt zu dem erwünschten Pedalweg oder Pedalvorschub und schließlich zum Ansprechen der wegabhängigen Schalter oder Sensoren 43,44. Durch die beschriebene, ohne zusätzlichen Herstellungsaufwand realisierbare Maßnahme nach der Erfindung wird folglich eine Erkennung des Übergangs aus dem ASR- in den Bremsmodus sichergestellt. Durch eine wechselseitige Überwachung der beiden wegabhängigen Schalter 43,44, die in bekannter und daher hier nicht näher erläuterter Weise erfolgt, ist gewährleistet, daß jeder Fehler rechtzeitig erkannt wird.

## Patentansprüche

1. Hydraulische Bremsanlage mit Blockierschutz- und Antriebsschlupfregelung für ein Fahrzeug mit einer angetriebenen und einer nicht angetriebenen Achse, mit einem mehrkreisigen Hauptzylinder (2), mit elektrisch steuerbaren Einlaßventilen (16,18,20,22) in den zu den Radbremsen führenden Druckmittelwegen und Auslaßventilen (17,19,21,23) die in den Druckabbauphasen die Radbremsen mit einem Druckausgleichsbehälter verbinden, mit einem Hilfsdruckversorgungssystem, das in den Antriebsschlupfregelphasen Bremsdruck zum Abbremsen der angetriebenen Räder erzeugt, wobei zur Begrenzung des Druckes Druckmittel über Druckbegrenzungsventile in den Hauptzylinder geleitet wird und von dort über Regelventile in den Druckausgleichsbehälter zurückfließt, und mit einem elektronischen Regler, dadurch **gekenzeichnet**, daß die Bremsanlage mit Pedalweg-Sensoren und/oder -Schaltern (43,44) ausgerüstet ist und daß der Regler (45) die Auslaßventile (19,21), die die Radbremsen (13,14) der nicht angetriebenen Räder (VL,VR) mit dem Druckausgleichsbehälter (11) verbinden, während einer Antriebsschlupfregelphase ansteuert und dadurch einen Druckmittelweg von dem Hauptzylinder (2) über die Einlaßventile (18,20) und Auslaßventile (19,21) der nicht angetriebenen Räder zu dem Druckausgleichsbehälter (11) freigibt.

2. Bremsanlage nach Anspruch 1, dadurch **gekenzeichnet**, daß die Ansteuerung der Auslaßventile (19,21) der nicht angetriebenen Räder (VL,VR) durch Anlegen einer Pulsfolge geschieht.

3. Bremsanlage nach Anspruch 1, dadurch **gekenzeichnet**, daß die Auslaßventile (19,21) der nicht angetriebenen Räder (VL,VR) während der gesamten Dauer der Antriebsschlupfregelphasen angesteuert werden.

4. Bremsanlage nach einem oder mehreren der Anspüche 1 bis 3, dadurch **gekenzeichnet**, daß ein Auslaßventil (19 oder 21), das nur eines der nicht angetriebenen Räder mit dem Druckausgleichsbehälter (11) verbindet, während der Antriebsschlupfregelphase angesteuert wird.

## Claims

1. A hydraulic brake system with anti-lock control and traction slip control for a vehicle having one driven and one non-driven axle, comprising a multiple-circuit master cylinder (2), electrically controllable inlet valves (16, 18, 20, 22) in the pressure-fluid conduits leading to the wheel brakes, and outlet valves (17, 19, 21, 23) which connect the wheel brakes with a pressure supply reservoir in the phases of pressure reduction, an auxiliary-pressure supply system which generates braking pressure in the traction slip control phases for braking the driven wheels, while, for limiting the pressure, pressure fluid is conveyed via pressure-limiting valves to the master cylinder and flows back from there to the pressure supply reservoir via control valves, and an electronic control unit,
**characterized** in that the brake system is equipped with pedal-travel sensors and/or pedal-travel switches (43, 44), and in that, during a traction slip control phase, the control unit (45) drives the outlet valves (19, 21) which connect the wheel brakes (13, 14) of the non-driven wheels (VL, VR) with the pressure supply reservoir (11), and thereby releases a pressure fluid conduit from the master cylinder (2) via the inlet valves (18, 20) and outlet valves (19, 21) of the non-driven wheels to the pressure supply reservoir (11).

2. A brake system as claimed in claim 1,
**characterized** in that the outlet valves (19, 21) of the non-driven wheels (VL, VR) are driven by applying a pulse train.

3. A brake system as claimed in claim 1,
**characterized** in that the outlet valves (19, 21) of the non-driven wheels (VL, VR) are driven during the entire duration of the traction slip control phases.

4. A brake system as claimed in any one or more of the claims 1 to 3,
**characterized** in that an outlet valve (19 or 21) which connects only one of the non-driven wheels with the pressure supply reservoir (11) is driven during the traction slip control phase.

## Revendications

1. Système de freinage hydraulique à régulation anti-blocage des roues et antipatinage en traction, pour un véhicule comprenant un essieu moteur et un essieu non-moteur, comportant un maître-cylindre (2) à plusieurs circuits, des clapets d'admission (16, 18, 20, 22) à commande électrique disposés dans les chemins d'écoulement de fluide sous pression rejoignant les freins de roues, et des clapets d'échappement (17, 19, 21, 23) reliant les freins de roues à un récipient égalisateur de pression pendant les périodes de diminution de la pression, comportant un système auxiliaire d'alimentation en pression qui, pendant les périodes de régulation antipatinage en traction, crée une pression de freinage permettant de £reiner les roues motrices, le fluide sous pression étant acheminé vers le maître-cylindre à travers des clapets limiteurs de pression en vue de limiter la pression, puis refluant du maître-cylindre au récipient d'égalisation de la pression à travers des clapets régulateurs, et comprenant un régulateur électronique,
caractérisé en ce que le système de freinage est équipé de capteurs et/ou de contacteurs (43, 44) de course de la pédale, et en ce que le régulateur (45) commande les clapets d'échappement (19, 21) reliant les £reins de roues (13, 14) des roues non-motrices (VL, VR) au récipient égalisateur de pression (11), pendant une période de régulation antipatinage en traction, et ouvre ainsi un chemin d'écoulement du fluide sous pression s'étendant du maître-cylindre (2) au récipient égalisateur de pression (11) via les clapets d'admission (18, 20) et les clapets d'échappement (19, 21) des roues non-motrices.

2. Système de freinage selon la revendication 1, caractérisé en ce que la commande des clapets d'échappement (19, 21) des roues non-motrices (VL, VR) est réalisée par application d'une série d'impulsions.

3. Système de freinage selon la revendication 1, caractérisé en ce que les clapets d'échappement (19, 21) des roues non-motrices (VL, VR) sont actionnés pendant toute la durée des périodes de régulation antipatinage en traction.

4. Système de freinage selon l'une ou plusieurs des revendications 1 à 3, caractérisé en ce qu'un clapet d'échappement (19 ou 21), qui relie une seule des roues non-motrices au récipient d'égalisation de la pression (11), est actionné pendant la période de régulation antipatinage en traction.
